# EUROPÄISCHE PATENTSCHRIFT

(11) **EP 2 585 745 B1**
(45) Veröffentlichungstag und Bekanntmachung des Hinweises auf die Patenterteilung: **30.03.2016**
(21) Anmeldenummer: 11721781.0
(22) Anmeldetag: 27.05.2011
(51) Int. Cl.: F16K 31/06

(54) **FLUIDDRUCKUMSCHALTVENTIL**
FLUID PRESSURE SWITCH VALVE
VANNE DE COMMUTATION PAR PRESSION DES FLUIDES

(30) Priorität: 25.06.2010 DE 102010025171
(43) Veröffentlichungstag der Anmeldung: 01.05.2013
(73) Patentinhaber: Pierburg GmbH, 41460 Neuss (DE)
(72) Erfinder: BUSE, Werner, 41564 Kaarst (DE); LAPPAN, Rolf, 50733 Köln (DE); DOHRMANN, Rolf, 41564 Kaarst (DE); SCHNELKER, Franz-Josef, 41470 Neuss (DE); SADOWSKI, Christoph, 44866 Bochum (DE)
(74) Vertreter: Patentanwälte ter Smitten Eberlein Rütten Partnerschaftsgesellschaft
(86) Internationale Anmeldenummer: PCT/EP2011/058714
(87) Internationale Veröffentlichungsnummer: WO 2011/160917

(56) Entgegenhaltungen:
- WO-A1-2010/056111
- DE-A1-102008 060 889
- US-A- 5 184 773
- US-A1- 2008 042 090
- US-A1- 2010 107 669
- US-B1- 6 701 959

## Beschreibung

Die Erfindung betrifft ein Fluiddruckschaltventil mit einem Gehäuse, das eine auf einen Spulenträger gewickelte Spule, einen in einer Lagerbuchse axial verschiebbaren Anker, einen Kern und eine Flussleiteinrichtung aufweist, und das eine erste Anschlussbohrung und einen Anschlussstutzen, der mit dem zu steuerndem Fluid verbunden ist, besitzt, wobei der Anschlussstutzen eine zweite Anschlussbohrung und mindestens einen Ventilsitz für ein Ventilglied des Ankers aufweist, wobei eine dritte Anschlussbohrung zur Verbindung mit einem Steuerraum vorgesehen ist, wobei das Ventilglied in einer ersten Position an dem ersten Ventilsitz anliegt und eine Verbindung zwischen der ersten und der dritten Anschlussbohrung herstellt und in einer zweiten Position an dem zweiten Ventilsitz anliegt und eine Verbindung zwischen der dritten und der zweiten Anschlussbohrung herstellt, wobei das Gehäuse aus einem Unterteil und einem Oberteil aufgebaut ist, wobei das Unterteil den Anschlussstutzen und die Anschlussbohrungen aufweist und in dem Oberteil des Gehäuses kraft- oder formschlüssig angeordnet ist.

Derartige Druckregelventile werden insbesondere bei hydraulischen Stelleinrichtungen, in Steuerungen für Kraftfahrzeugautomatikgetriebe oder auch in Kombination mit einer druck- bzw. durchsatzgesteuerten Motorölpumpe eingesetzt. Dabei kann es sich um sogenannte On/Off Ventile handeln oder auch sogenannte Modulatorventile, die einen Durchsatz stufenlos regeln können. Beispielhaft soll hier ein On/Off Regelventil aufgeführt werden, das aus der DE 197 16 185 A1 bekannt ist. Hierbei wirkt ein elektromagnetisch angetriebener Anker mit einem Ventilsitz zusammen, um einen Anschlussstutzen fluidisch mit einer Anschlussbohrung zu verbinden. Dabei kann der Anker mit Druckfedern und dem elektromagnetischen Antrieb derart zusammenwirken, dass ein abgedichtetes Verschließen in der Off- Stellung gewährleistet ist. Um dies sicherzustellen, sind hohe Anforderungen an den Elektromagnetantrieb und die Fertigungsgenauigkeit des Fluiddruckumschaltventils zu stellen, was naturgemäß zu einem hohen Herstellungs- und Montageaufwand führt. Zudem ist bei einem derartigen Fluiddruckumschaltventil lediglich eine Fluidströmungsrichtung realisierbar, was dazu führt, dass bei Anwendungen, die einen Fluidstrom in zwei Richtungen benötigen, zusätzliche Maßnahmen getroffen werden müssen, um diese Möglichkeit zu gewährleisten. Aus der US 6,701,959 B1 ist ein gattungsgemäßes Fluiddruckschaltventil bekannt, das jedoch kompliziert im Aufbau ist und daher aufwendig herzustellen ist.

Der Erfindung liegt daher die Aufgabe zugrunde, ein Fluiddruckumschaltventil zu schaffen, das seine Funktionsfähigkeit bei möglichst geringem Herstellungs- und Montageaufwand gewährleistet, wobei der Fluidstrom in unterschiedlichen Richtungen ermöglicht werden sollte.

Die Aufgabe wird dadurch gelöst, dass im zum Kern gerichteten Teil des Unterteils die Lagerbuchse für den Anker vorgesehen ist und im entgegengesetzten Teil des Unterteils die Ventilsitze für das Ventilglied angeordnet sind, wobei der Anker hohl ausgeführt ist und über ein Rohrelement mit dem Ventilglied verbunden ist, derart, dass ein Ventilinnenraum einen an der zweiten Anschlussbohrung anliegenden Druck aufweist, wobei der Anker, das Rohrelement und das Ventilglied mehrteilig ausgeführt sind, wobei das Rohrelement in den Anker eingepresst ist. Hierdurch ist es auf einfache Weise möglich, ein hydraulisches Stellelement, wie zum Beispiel die Verstelleinrichtung einer Ölpumpe zu steuern. Weitere Zusatzelemente sind nicht mehr erforderlich.

Auch wird eine besonders einfach und damit auch kostengünstig herzustellende Ausführungsform geschaffen. Darüber hinaus ist es möglich den sogenannten Restluftspalt (Abstand zwischen Anker und Kern im gestromten Zustand) während des Montageprozesses einzustellen. Dabei können die Ventilsitze als Buchsenelemente ausgeführt sind, die zum Ventilglied gerichtete abgeschrägte Anlageflächen aufweisen, um eine linienförmige und damit dichte Anlage zwischen Ventilsitz und Ventilglied zu gewährleisten.

Als vorteilhaft kann es sich erweisen, wenn eine wirksame Fläche des Ventilgliedes kleiner oder größer als eine wirksame Fläche des Ankers ist. Im vorliegenden Ausführungsbeispiel, in dem der Motoröldruck p₁ an der zweiten Anschlussbohrung anliegt, kann die Öffnungsfunktion unterstützt werden, wenn die wirksame Fläche des Ventilgliedes größer als eine wirksame Fläche des Ankers ausgeführt ist. Ist eine Unterstützung der Schließfunktion gewünscht, kann in diesem Fall die wirksame Fläche des Ventilgliedes kleiner als die wirksame Fläche des Ankers ausgeführt sein. Um eine störungsfreie Durchströmung der dritten Anschlussbohrung zu gewährleisten, kann mindestens eines der beiden Buchsenelemente hinsichtlich der dritten Anschlussbohrung zurückversetzt angeordnet sein.

Nachfolgend wird die Erfindung anhand einer bevorzugten Ausführungsform unter Bezugnahme auf die anliegende Zeichnung näher erläutert.

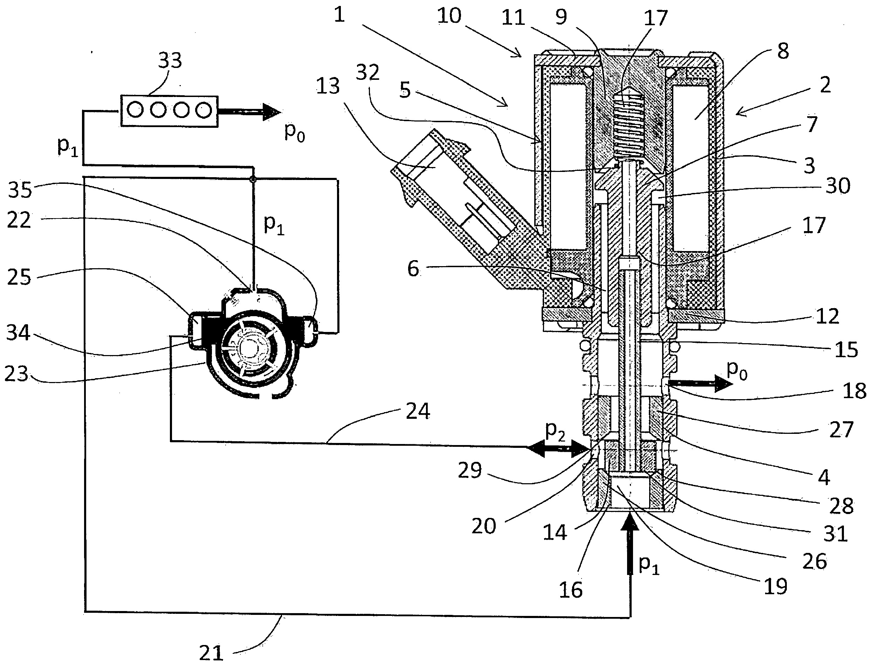

Hierbei zeigt die einzige Figur eine Schnittansicht einer bevorzugten Ausführungsform eines Druckregelventils, wobei die Einbindung in einen Ölkreislauf zur Verdeutlichung der Funktionsweise schematisch dargestellt ist.

Das erfindungsgemäße Druckregelventil 1 weist ein Gehäuse 2 auf, das im Wesentlichen aus einem Oberteil 3 und einem Unterteil 4 aufgebaut ist. Das Oberteil 3 weist eine elektromagnetische Antriebseinheit 5 auf, die auf einen in einer Lagerbuchse 6 axial verschiebbar angeordneten Anker 7 einwirkt. Der elektromagnetische Antrieb 5 besteht im Wesentlichen aus einer Spule 8, einem Kern 9 und aus einer Flussleiteinrichtung 10, die aus einem Rückschlussblech 11 und einem Joch 12 besteht. Das in Kunststoff ausgeführte Gehäuse 2 weist zudem noch einen Stecker 13 zur Verbindung mit einem an sich bekannten und nicht dargestellten Steuerungsmodul auf. Der elektromagnetische Antrieb 5 wirkt auf den Anker 7 ein der an seinem dem Kern 9 abgewandten Ende ein Ventilglied 14 aufweist. Das Ventilglied 14 ist im vorliegenden Fall über eine Verbindungselement 15, das im vorliegenden Fall als Rohrelement ausgeführt ist, verbunden. Das Rohrelement 15 ist als gezogenes Rohr mit kalibriertem Aussendurchmesser ausgeführt. Der Innendurchmesser ist vernachlässigbar, da er in Zusammenhang mit dem hohl ausgeführten Anker 7 lediglich dem Druckausgleich dient. Der Anker 7, das Ventilglied 14 und das Rohrelement 15 sind im vorliegenden Fall mehrteilig ausgeführt. Der Anker 7 ist dabei durch eine Feder 17 gegenüber dem Kern 9 in einer Schließstellung vorgespannt. Die Feder 17 ist im Kern 9 geführt. Das Rohrelement 15 ist in den hohl ausgeführten Anker 7 eingepresst. Auf dem vom Anker 7 abgewandten Ende des Rohrelements 15 ist das Ventilglied aufgepresst. Die Ein-, Aufpressvorgänge finden während der Endmontage des Fluiddruckumschaltventils 1 statt. Über die Pressverbindung zwischen dem Anker 7 und dem Rohrelement 15 kann der sogenannte "Restluftspalt" zwischen dem Anker 7 und dem Kern 9 im bestromten Zustand eingestellt werden. Der ebenfalls für die Funktion des Fluiddruckumschaltventils 1 wichtige Ventilhub kann durch die Aufpressstrecke des Ventilgliedes 14 auf das Rohrelement 15 beeinflusst werden.

Im Unterteil 4 ist die Lagerbuchse 6 für den Anker 7 angeordnet, desweiteren weist das Unterteil 6 erste, zweite und dritte Anschlussbohrungen 18, 19, 20 auf. Es sollte deutlich sein, dass mit dem Begriff Anschlussbohrung auch eine Reihe von Bohrungen im Unterteil 4 gemeint sein kann.

Die erste Anschlussbohrung 18 führt zu einem nicht weiter dargestellten Tank, der einen Atmosphärendruck p₀ aufweist. Die zweite Anschlussbohrung 19, im als Anschlussstutzen 16 ausgeführten Teil des Unterteils 4, ist über eine Leitung 21 mit dem Ausgang 22 eines zu steuernden Verbrauchers 23, im vorliegenden Beispiel eine als Flügelzellenpumpe ausgeführte Ölpumpe, verbunden. Dementsprechend liegt an der zweiten Anschlussbohrung ein Motoröldruck p₁ an. Die dritte Anschlussbohrung 20 ist über eine Leitung 24 mit einem ersten Steuerraum 25 der verstellbaren Flügelzellenpumpe 23 verbunden. Hier liegt der Steuerdruck p₂ an. Im Anschlussstutzen 16 sind zwei Buchenelemente 26, 27 vorgesehen, die angeschrägte Anlageflächen 28, 29 besitzen die einen ersten und zweiten Ventilsitz bilden. In Kombination mit dem Ventilglied 14 wird dementsprechend eine linienförmige und damit dichte Anlage zwischen dem Ventilglied 14 und dem jeweiligen Ventilsitz gewährleistet. Natürlich kann auch das Ventilglied 14 entsprechend abgeschrägte Flächen aufweisen. Im nicht bestromten Zustand liegt das Ventilglied 14 am ersten Ventilsitz 28 an, so dass die erste Anschlussbohrung 18 fluidisch mit der dritten Anschlussbohrung 20 verbunden ist. Im bestromten Zustand liegt das Ventilglied 14 am zweiten Ventilsitz 29 an, so dass die dritte Anschlussbohrung 20 fluidisch mit der zweiten Anschlussbohrung 19 verbunden ist. Im vorliegenden Ausführungsbeispiel ist das erste Buchsenelement 26 zurückversetzt zur dritten Anschlussbohrung 20 angeordnet, so dass eine störungsfreie Strömung gewährleistet ist.

Da der Anker 7 und das Rohrelement 15 im vorliegenden Ausführungsbeispiel hohl ausgeführt sind, ist über die zweite Anschlussbohrung 19 eine Verbindung eines Innenraums 30 mit dem Atmosphärendruck p₁ gewährleist. Hierdurch ist der elektromagnetische Antrieb 5 nicht unterschiedlichen Drücken ausgesetzt, was auch eine exakte Ansteuerung des Ankers 7 gewährleistet.

Im vorliegendem Ausführungsbeispiel ist die wirksame Fläche 31 des Ventilgliedes 14 geringfügig größer als die wirksame Fläche 32, was dazu führt, dass die resultierenden Kräfte im nicht bestromten Zustand, die sich aus dem Anliegen des Druckes p₁ ergeben, die Öffnungskraft unterstützen und zu einer "Selbstöffnung" des Fluidruckumschaltventils 1 bei zu hohem Motoröldruck p₁ führt.

Das erfindungsgemäße Fluidruckumschaltventil 1 funktioniert nun wie folgt. Im vorliegenden Fall soll eine an sich bekannte Motorölpumpe 23 die als regelbare Flügelzellenpumpe ausgebildet ist gesteuert werden. Die an sich bekannte Flügelzellenpumpe 23 fördert das Motoröl zum Motor 33 wobei das überschüssige Öl zum Tank mit dem Atmosphärendruck p₀ zurückgeführt wird. Das geförderte Motoröl besitzt den Druck p₁. Ein maximales Fördervolumen wird bei maximaler Exzentrizität der Drehachse der Flügelzellenpumpe 23 erreicht, wobei die Exzentrizität durch eine Verschiebung eines Schiebers 34 in der Flügelzellenpumpe 23 bewerkstelligt wird. Ein minimales Fördervolumen wird bei zentrischer Anordnung der Drehachse erreicht. Der Schieber 34 wirkt mit 2 Steuerräumen 25, 35 zusammen, wobei im Steuerraum 35 der Druck p₁ und im Steuerraum 25 der Druck p₂ anliegt. Im Steuerraum 25 ist die Anlagefläche des Schiebers 34 jedoch größer ausgelegt, sodass bei ei ngeschaltetem Druckregelventil 1 der Schieber 34 die kleinste Exzentrizität und damit das geringste Fördervolumen bewirkt. Wird nun eine Vergrößerung der Exzentrizität und damit eine Erhöhung des Fördervolumens der Flügelzellenpumpe 23 gewünscht, wird das Fluiddruckumschaltventil 1 ausgeschaltet und der Druck im Steuerraum 25 dadurch verringert, dass Öl aus dem Steuerraum 25 über die Leitung 24 und die zweite Anschlussbohrung 19 zum Tank fließen kann. Hierdurch ist auch eine Fail-Safe-Funktion gewährleistet, die auch bei defektem Fluidruckumschaltventil 1 ein hohes Fördervolumen gewährleistet. Ist nun wieder eine Verringerung des Fördervolumens gewünscht, kann das Druckregelventil 1 geschlossen werden und die erste Anschlussbohrung 18 mit der dritten Anschlussbohrung 20 verbunden werden, derart, dass der erste Steuerraum 25 mit dem Motoröldruck p₁ beaufschlagt wird, was in Kombination mit dem unterschiedlichen Flächenverhältnis der Anlageflächen des Schiebers 34 gewährleistet, dass eine schnelle Verschiebung der Drehachse der Flügelzellenpumpe 23 zur zentrischen Lage stattfindet. Desweiteren wird das Fluiddruckumschaltventil 1 genutzt, um das aufgrund von Undichtigkeiten und Bewegungsspalten anfallende Lecköl insbesondere bei geringem Druckniveau (geringe Exzentrizität, geringes Fördervolumen) abzuführen.

Es sollte deutlich sein, dass die Erfindung nicht auf die im Ausführungsbeispiel beschriebene Anschlusswahl beschränkt ist. Insbesondere ist es denkbar die ersten Anschlussbohrung 18 mit der Motorölleitung zu verbinden und die zweite Anschlussbohrung 19 mit dem Tank zu verbinden.

## Patentansprüche

1. Fluiddruckschaltventil (1) mit einem Gehäuse (2), das eine auf einen Spulenträger gewickelte Spule (8), einen in einer Lagerbuchse (6) axial verschiebbaren Anker (7), einen Kern (9) und eine Flussleiteinrichtung (10) aufweist, und das eine erste Anschlussbohrung (18) und einen Anschlussstutzen (16), der mit dem zu steuerndem Fluid verbunden ist, besitzt, wobei der Anschlussstutzen (16) eine zweite Anschlussbohrung (19) und mindestens einen Ventilsitz (28,29) für ein Ventilglied (14) des Ankers (7) aufweist, wobei eine dritte Anschlussbohrung (20) zur Verbindung mit einem Steuerraum (25) vorgesehen ist, wobei das Ventilglied (14) in einer ersten Position an dem ersten Ventilsitz (28) anliegt und eine Verbindung zwischen der ersten (18) und der dritten (20) Anschlussbohrung herstellt und in einer zweiten Position an dem zweiten Ventilsitz (29) anliegt und eine Verbindung zwischen der dritten (20) und der zweiten (19) Anschlussbohrung herstellt, wobei das Gehäuse (2) aus einem Unterteil (4) und einem Oberteil (3) aufgebaut ist, wobei das Unterteil (4) den Anschlussstutzen (16) und die Anschlussbohrungen (18, 19, 20) aufweist und in dem Oberteil (3) des Gehäuses (2) kraft- oder formschlüssig angeordnet ist, **dadurch gekennzeichnet, dass** im zum Kern (9) gerichteten Teil des Unterteils (4) die Lagerbuchse (6) für den Anker (7) vorgesehen ist und im entgegengesetzten Teil des Unterteils (4) die Ventilsitze (28, 29) für das Ventilglied (14) angeordnet sind, wobei der Anker (7) hohl ausgeführt ist und über ein Rohrelement (15) mit dem Ventilglied (14) verbunden ist, derart, dass ein Ventilinnenraum (30) einen an der zweiten Anschlussbohrung (19) anliegenden Druck aufweist, wobei der Anker (7), das Rohrelement (15) und das Ventilglied (14) mehrteilig ausgeführt sind, wobei das Rohrelement (15) in den Anker (7) eingepresst ist.

2. Fluiddruckschaltventil nach Anspruch 1, **dadurch gekennzeichnet, dass** die Ventilsitze (28, 29) als Buchsenelemente (26, 27) ausgeführt sind, die zum Ventilglied (14) gerichtete abgeschrägte Anlagenflächen aufweisen.

3. Fluiddruckschaltventil nach einem der vorhergehenden Ansprüche, **dadurch gekennzeichnet, dass** eine wirksame Fläche (31) des Ventilgliedes (14) kleiner oder größer als eine wirksame Fläche (32) des Ankers (7) ist.

4. Fluiddruckschaltventil nach einem der vorhergehenden Ansprüche, **dadurch gekennzeichnet, dass** mindestens eines der beiden Buchsenelemente (26, 27) hinsichtlich der dritten Anschlussbohrung (20) zurückversetzt angeordnet ist.

## Claims

1. A fluid pressure reversing valve (1) comprising a housing (2) having a coil (8) wound on the coil carrier, an armature (7) configured to be axially displaceable in bearing bush (6), a core (9) and a flux guiding device (10), and which has a first connection bore (18) and a connection sleeve (16) configured to communicate with a fluid to be controlled, the connection sleeve (16) comprising a second connection bore (19) and at least one valve seat (28, 29) for a valve element (14) of the armature (7), wherein a third connection bore (20) is provided for communication with a control chamber (25), the valve element (14) being configured to abut against the first valve seat (28) in a first position and forms a connection between the first (18) and the third connection bore (20), and to abut against the second valve seat (29) in a second position and forms a connection between the third (20) and the second connection bore (19), the housing (2) comprising a lower part (4) and an upper part (3), the lower part (4) comprising the connection sleeve (16) and the connection bores (18, 19, 20), the lower part (4) being arranged in an interlocking manner or in a force-fitting manner in the upper part (3), **characterized in that** the bearing bush (6) for the armature (7) is provided in a part of the lower part (4) facing the core (9), and the valve seats (28, 29) for the valve element (14) are each arranged in an opposite part of the lower part (4), wherein the armature (7) is hollow and is connected with the valve element (14) via a tube element (15) so that a valve interior (30) has a pressure prevailing at the second connection bore (19), wherein the armature (7), the tube element (15) and the valve element (14) are provided as multiple parts, and the tube element (15) is pressed into the armature (7).

2. The fluid pressure reversing valve of claim 1,**characterized in that** the valve seats (28, 29) are provided as bush elements (26, 27), each comprising chamfered abutment surfaces directed towards the valve element (14).

3. The fluid pressure reversing valve of one of the preceding claims, **characterized in that** an effective surface (31) of the valve element (14) is smaller or larger than an effective surface (32) of the armature (7).

4. The fluid pressure reversing valve of one of the preceding claims, **characterized in that** at least one of the two bush elements (26, 27) is offset backward with respect to the third connection bore (20).

## Revendications

1. Vanne de commutation par pression des fluides (1) avec un boitier (2) comprenant une bobine (8) enroulée sur un support de bobine, une armature (7) axialement déplaçable dans une douille de palier (6), un noyau (9) et un dispositif the guidage de flux (10), et comprenant un premier trou de raccordement (18) et une tubulure de raccordement (16), qui est en communication avec le fluide à commander, ladite tubulure de raccordement (16) comprenant un deuxième trou de raccordement (19) et au moins une siège de vanne (28, 29) pour un élément de vanne (14) de ladite armature (7), un troisième trou de raccordement (20) étant prévu pour la communication avec une chambre de commande (25), ledit élément de vanne (14) s'appuyant, dans une première position, sur la première siège de vanne (28) et établissant une communication entre le premier (18) et le troisième trou de raccordement (20) et s'appuyant, dans une deuxième position, sur la deuxième siège de vanne (29) et établissant une communication entre le troisième (20) et le deuxième trou de raccordement (19), ledit boitier étant formé par une partie inférieure (4) et une partie supérieure (3), ladite partie inférieure (4) comprenant ladite tubulure de raccordement (16) et les trous de raccordement (18, 19, 20) et étant disposée dans ladite partie supérieure (3) du boitier (2) par friction ou par engagement positif, **caractérisée en ce que** la douille de palier (6) pour ladite armature (7) est prévue dans la partie de la partie inférieure (4) tournée vers le noyau (9), et que les sièges de vanne (28, 29) pour l'élément de vanne (14) sont disposées dans la partie opposée de la partie inférieure (4), ladite armature (7) étant creuse et raccordée avec ledit élément de vanne (14) par un élément de tube (15) de sorte qu'un intérieur (30) de la vanne présente la pression appliquée sur le deuxième trou de raccordement (19), ladite armature (7), ledit élément de tube (15) et ledit élément de vanne (14) étant réalisés en plusieurs parties, ledit élément de tube (15) étant pressé dans ladite armature (7).

2. Vanne de commutation par pression des fluides selon la revendication 1, **caractérisée en ce que** les sièges de vanne (28, 29) sont réalisées comme éléments de douille (26, 27) avec des surfaces de contact chanfreinées et tournées vers ledit élément de vanne (14).

3. Vanne de commutation par pression des fluides selon l'une quelconque des revendications précédentes, **caractérisée en ce qu'**une surface effective (31) dudit élément de vanne (14) est inférieure ou supérieure à une surface effective (32) de ladite armature (7).

4. Vanne de commutation par pression des fluides selon l'une quelconque des revendications précédentes, **caractérisée en ce qu'**au moins un des deux éléments de douille (26, 27) est décalé vers l'arrière par rapport au troisième trou de raccordement (20).
